# EUROPÄISCHE PATENTSCHRIFT

(11) **EP 0 327 819 B1**
(45) Veröffentlichungstag und Bekanntmachung des Hinweises auf die Patenterteilung: **13.10.1993**
(21) Anmeldenummer: 89100444.2
(22) Anmeldetag: 12.01.1989
(51) Int. Cl.: F02M 41/06, F02M 45/02

(54) **Kraftstoffeinspritzpumpe für Brennkraftmaschinen**
Fuel injection pump for internal combustion engines
Pompe à injection à carburant pour moteurs à combustion interne

(30) Priorität: 10.02.1988 DE 3804025
(43) Veröffentlichungstag der Anmeldung: 16.08.1989
(73) Patentinhaber: ROBERT BOSCH GMBH, 70442 Stuttgart (DE)
(72) Erfinder: Rembold, Helmut, D-7000 Stuttgart 40 (DE); Linder, Ernst, D-7130 Mühlacker (DE); Haag, Gottlob, D-7145 Markgröningen (DE)

(56) Entgegenhaltungen:
- EP-A- 0 244 340
- WO-A-85/04449
- DE-A- 1 940 995
- DE-A- 2 831 393
- DE-A- 2 904 947
- DE-A- 3 500 618
- US-A- 2 215 488

## Beschreibung

Die Erfindung geht von einer Kraftstoffeinspritzpumpe der Gattung des Patentanspruchs 1 aus. Bei einer solchen, durch die DE-A-1 940 995 bekannten Kraftstoffeinspritzpumpe werden drei Pumpenkolben durch eine Taumelscheibe als Nockenantrieb hin und her bewegt. Dabei ist es vorgesehen, daß abwechselnd einmal zwei Pumpenkolben zur Förderung der Kraftstoffeinspritzmenge vorgesehen sind und einmal ein einziger. Zu diesem Zweck ist der Verteiler mit einem Verbindungskanal versehen, der in bestimmten Drehstellungen zwei der Pumpenarbeitsräume, die durch die Pumpenkolben begrenzt werden, miteinander verbindet. Von dem Verbindungskanal führt eine Längsbohrung und eine Querbohrung zu einer Verteileröffnung ab, über die die geförderte Kraftstoffmenge auf jeweils eine der mehreren Einspritzstellen verteilt wird. In anderen Stellungen des Verteilers ist über eine zusätzliche Radialbohrung zur Längsbohrung nur jeweils einer der Pumpenarbeitsräume mit der Längsbohrung bzw. der Verteileröffnung verbunden. Ferner sind am Verteiler mehrere Längsnuten und eine Teilringnut vorgesehen, über die gesteuert das Ende eines jeweiligen Fördervorgangs von Pumpenkolben unter Einspritzdruck bestimmt wird. Durch die Teilringnut und über zwei der Längsnuten werden im übrigen während des Saughubs der einzelnen Pumpenkolben die Pumpenarbeitsräume mit Kraftstoff versorgt. Zusätzlich ist in einer Entlastungsleitung der Längsbohrung im Verteiler ein Ventil zur Steuerung von Einspritzmenge vorgesehen. Dieses Ventil besteht aus einem Ringschieber, der mehrere durchgehende Radialbohrungen aufweist, die mit einer Schrägnut an der Mantelfläche des Verteilers zusammenarbeiten. Die Schrägnut ist dabei ständig mit dem Längskanal verbunden.

Bei dieser bekannten Einspritzpumpe erfolgt die Kraftstoffeinspritzmengensteuerung durch eine Spritzendesteuerung durch ein mittels der Längsnut in dem Verteiler verwirklichten Drehschieberventil, wobei die Möglichkeit besteht, den Beginn der jeweiligen Hochdruckförderung durch den Ringschieber zu steuern. Diese Pumpe ist sehr aufwendig und bedarf eine exakte Abstimmung der Förderraten der einzelnen Pumpenkolben aufeinander, um eine gleichmäßig Förderrate zu erzeugen. Zur Steuerung der Einspritzmenge sind in aufwendiger Weise zwei Ventile notwendig.

### Vorteile der Erfindung

Mit der erfindungsgemäßen Kraftstoffeinspritzpumpe mit den kennzeichnenden Merkmalen des Hauptanspruchs erhält man in vorteilhafter Weise eine Kraftstoffversorgung von mehreren Einspritzstellen, wobei zur Erzielung des hohen Einspritzdruckes für eine Einspritzstelle immer zugleich mehrere Pumpenkolben zusammenarbeiten. Auf diese Weise erzielt man bei kleinem Bauvolumen der Kraftstoffeinspritzpumpe eine hohe Förderrate, die kontinuierlich nacheinander jeder Einspritzdüse zur Verfügung steht.

Durch die in den Unteransprüchen 2 bis 11 aufgeführten Maßnahmen sind vorteilhafte Weiterbildungen der im Anspruch 1 angegebenen Lösung gegeben. In vorteilhafter Weise kann nach Anspruch 5 auch pro Zylinder einer Brennkraftmaschine eine aufgeteilte Einspritzung erfolgen, nämlich eine Voreinspritzung nach dem Ladungswechsel des Zylinders nach OT und eine Haupteinspritzung am Ende des Kompressionshubes vor OT. Dies ergibt insbesondere Vorteile bei einer Brennkraftmaschine, die fremdgezündet wird und bei der der Kraftstoff direkt in den Brennraum eingespritzt wird.

### Zeichnung

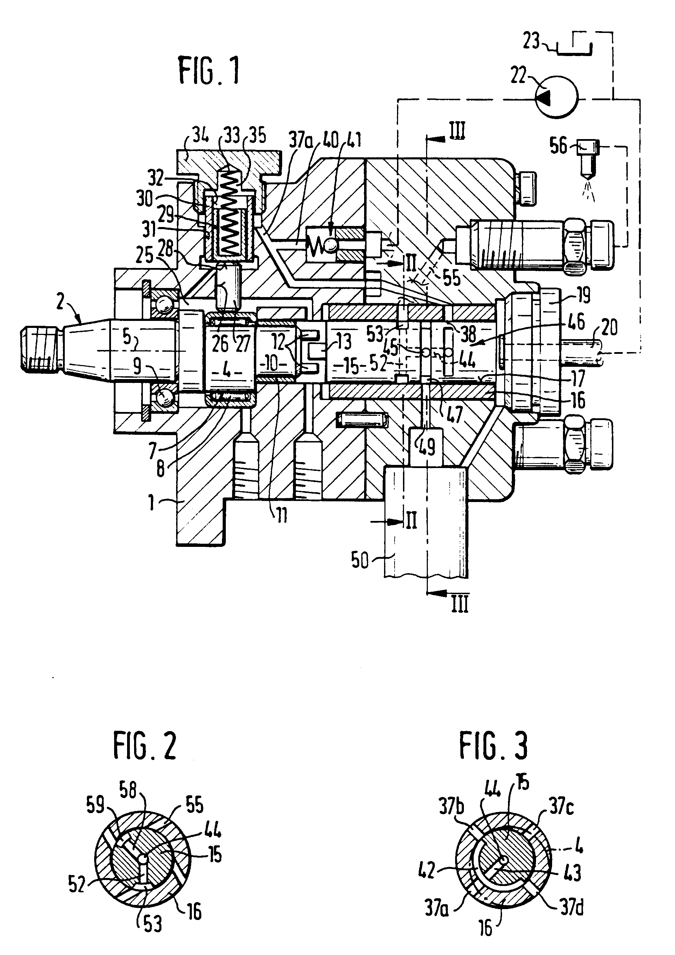

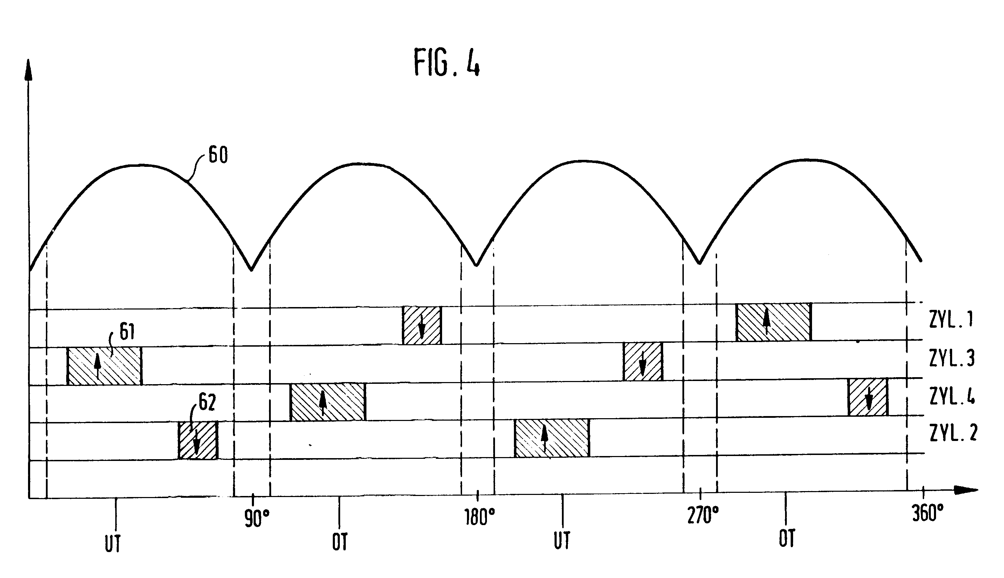

Zwei Ausführungsbeispiele der Erfindung sind in der Zeichnung dargestellt und werden in der nachfolgenden Beschreibung näher erläutert. Es zeigen Figur 1 ein erstes Ausführungsbeispiel der Erfindung mit einem koaxial zur Antriebswelle angetriebenen Verteiler und mit vier Pumpenkolben, die vom Antriebsnocken angetrieben werden, Figur 2 einen ersten Schnitt durch den Verteiler, Figur 3 einen zweiten Schnitt durch den Verteiler gemäß Figur 1 und, Figur 4 ein Steuerdiagramm der Pumpenförderung.

### Beschreibung der Ausführungsbeispiele

Bei einer Verteilerkraftstoffeinspritzpumpe gemäß Figur 1 ist in einem Pumpengehäuse 1 eine von außen in das Gehäuse eintretende Antriebswelle 2 gelagert, auf der ein Antriebsnocken 4 innerhalb des Gehäuses liegend angeordnet ist. Dieser Nocken weist als Nockenbahn eine exzentrisch zur Achse 5 der Antriebswelle 2 liegenden Kreisbahn 7 auf, auf der vorzugsweise ein Rollen- oder Nadellager 8 angeordnet ist. Am Durchtritt durch das Gehäuse ist die Antriebswelle auf einem Kugellager 9 gelagert und an ihrem demgegenüberliegenden Teil, angrenzend an den Antriebsnocken 4 als Zapfen 10 ausgebildet, der in einem in das Gehäuse eingebrachten Gleitlager 11 gelagert ist. Stirnseitig weist der Zapfen Kupplungsklauen 12 auf, die mit entsprechenden Kupplungsklauen 13 eines koaxial zur Achse 5 der Antriebswelle bzw. des Zapfens 10 liegenden Verteilers 15 zusammenwirken. Der Verteiler ist in einer durch eine Zylinderbüchse 16 gebildeten Führungsbohrung 17 gelagert, die auf der der Antriebswelle abgewandten Seite durch einen in das Gehäuse 1 eingebrachten Stopfen 19 verschlossen ist, wobei der Stopfen zusammen mit dem Zapfen 10 der axialen Sicherung des Verteilers dient. Durch den Stopfen führt eine Leckleitung 20 zum Kraftstoffvorrat zurück bzw. zur Saugseite einer Kraftstoffvorförderpumpe 22, die aus einem Kraftstoffbehälter 23 der Kraftstoffeinspritzpumpe Kraftstoff zuführt.

In einer Radialebene zum Antriebsnocken gehen von dem den Nocken 4 mit Nadellager 8 aufnehmenden Raum 25 im Kraftstoffeinspritzpumpengehäuse 1 radiale Bohrung 26 ab, von denen in Figur 1 nur eine gezeigt ist. In diesen Bohrungen ist ein Pumpenkolbenstößel 27 verschiebbar, dessen eine Stirnseite auf dem Nagellager 8 aufliegt und dessen andere Stirnseite an der Außenstirnseite 28 eines topfförmigen Pumpenkolbens 29 anliegt. Dieser ist in einer Zylinderbohrung 32 einer Zylinderbüchse 30 geführt, die in einer koaxial zur radialen Bohrung 26 liegenden, anschließenden Bohrung 31 eingebracht ist. Auf der innen liegenden Stirnseite des Pumpenkolbens greift eine Druckfeder 33 an, die sich andererseits an einem die Bohrung 31 verschließenden Stopfen 34 abstützt und den Pumpenkolben in Anlage am Pumpenstößel 27 und diesen wiederum am Nocken 4 hält. Zwischen dem Stopfen 34 und der Zylinderbüchse 30 bzw. dem Pumpenkolben 29 wird ein Pumpenarbeitsraum 35 eingeschlossen, von dem ein Teilkanal 37a eines Uberstromkanals 37 abführt und mit einer Überströmöffnung 38 in einer Radialebene der Führungsbohrung 17 mündet. Außer dem soeben beschriebenen Pumpenkolben mit Teilkanal 37a befinden sich weitere drei Pumpenkolben in regelmäßigen Abständen um die Achse 5 verteilt im Pumpengehäuse. Von den entsprechenden Pumpenarbeitsräumen 35 führen weitere Teilkanäle 37b, 37c und 37d in den Führungszylinder 17. In die Teilkanäle 37 mündet jeweils eine Fülleitung 40, die von der Förderseite der Kraftstoffvorförderpumpe 22 abzweigt und ein in Richtung Pumpenarbeitsraum öffnendes Rückschlagventil 41 enthält. Statt des Rückschlagventils kann auch ein Drehschieber vorgesehen werden, der den Fülleitungsdurchtritt jeweils in der Saugphase des Pumpenkolbens öffnet. Dabei kann der Verteiler selbst als Drehschieber ausgebildet sein und entsprechende Steuerlängsnuten aufweisen.

In der durch die Einmündung der Uberströmöffnungen 38 definierten Radialebene ist der Verteiler als Drehschieber 46 ausgebildet und weist dazu eine Ausnehmung auf, die im ausgeführten Beispiel aus einer Teilringnut 42 besteht, die sich über einen Winkel von 180° erstreckt und die ständig wenigstens zwei der Teilkanäle 37a bis 37d miteinander verbindet. Von der Teilringnut 42 geht eine Radialbohrung 43 zu einer Längsbohrung 44 ab, die beidseitig an den Enden des Verteilers verschlossen ist. Über diese Längsbohrung 44 und eine Querbohrung steht die Teilringnut 42 mit einer durchgehenden Außenringnut 47 in der Mantelfläche des Verteilers in Verbindung. Im Bereich dieser Außenringnut führt von der Führungsbohrung 17 eine Entlastungsleitung 49 ab, die zum Beispiel Verbindung mit der Leckleitung 20 haben kann und deren Durchtrittsquerschnitt durch ein elektrisch gesteuertes Ventil 50 zu öffnen oder zu schließen ist.

Weiterhin führt von der Längsbohrung 44 eine zweite Radialbohrung 52 ab, die zu einer Verteileröffnung 53 an der Mantelfläche des Verteilers führt. In der durch diese Verteileröffnung bestimmten Radialebene führen von der Führungsbohrung 17 Druckleitungen 55 ab, die jeweils gegebenenfalls unter Zwischenschaltung eines Rückschlagventils oder Entlastungsventils mit einem der jeweiligen Einspritzstelle an der Brennkraftmaschine zugeordneten Kraftstoffeinspritzventil 56 verbunden sind. Entsprechend der Zahl der zu versorgenden Zylinder oder Einspritzstellen der Brennkraftmaschine sind solche Druckleitungen 55 am Umfang der Führungsbohrung 17 verteilt angeordnet. Sie werden im Wechsel mit der Drehung des Verteilers bei entsprechenden Pumpenkolbenförderhüben mit unter Einspritzdruck stehendem Kraftstoff versorgt. Die Dauer der Einspritzung bestimmt dabei das elektrisch gesteuerte Ventil 50, das angesteuert von einer entsprechenden Steuerschaltung mit dem Schließen der Entlastungsleitung den Einspritzbeginn und mit dem Öffnen der Entlastungsleitung das Einspritzende bestimmt. Zugleich wird damit sowohl die Einspritzmenge als auch die Phasenlage der Einspritzung bestimmt.

Ergänzend kann von der Längsbohrung 44, die einen Teil des zur Verteileröffnung oder zur Entlastungsleitung führenden Überströmkanals 37 darstellt, auch noch eine dritte Radialbohrung 58 verbunden sein, wie im Schnitt gemäß Figur 2 gezeigt. Diese führt innerhalb einer mit der zweiten Radialbohrung 52 gemeinsamen Radialebene zu einer zweiten Verteileröffnung 59 in der Mantelfläche des Verteilers und läuft der ersten Verteileröffnung 53 um einen Winkel von 135° vor, dies bei einer Kraftstoffeinspritzpumpe mit vier Druckleitungen 55, die pro Umdrehung des Verteilers angesteuert werden und in regelmäßigen Abständen verteilt angeordnet sind. Diese zweite Verteileröffnung 59 ist jeweils dann mit einer der Druckleitungen 55 in Verbindung, wenn die erste Verteileröffnung durch die Führungsbohrung 17 verschlossen ist. Auf diese Weise kann mit Hilfe des elektrisch gesteuerten Ventils sowohl die über die erste Verteileröffnung 53 als auch die zweite Verteileröffnung 59 geförderte Kraftstoffeinspritzmenge gesteuert werden. Auf diese Weise erhält man eine sequentielle Einspritzung in jedem Zylinder bestehend aus einer Voreinspritzung, über die zweite Verteileröffnung zugeführt, und eine Haupteinspritzung, über die erste Verteileröffnung 53 zugeführt. In bekannter Weise kann damit bei fremdgezündeten Brennkraftmaschinen eine Voreinspritzung von Kraftstoff mit beginnendem Saugtakt des Brennkraftmaschinenkolbens in den Zylinder erfolgen, wobei diese Menge Zeit hat, sich über nur wenig weniger als 180° Kurbewellendrehwinkel mit der eingesaugten Verbrennungsluft zu vermischen. Die Haupteinspritzmenge erfolgt dann kurz vor dem eigentlichen Zündzeitpunkt vor Ende des Kompressionstaktes. Mit einer solchen Einspritzfolge erhält man mit Direkteinspritzung in die Brennräume der Brennkraftmaschine eine kraftstoffsparende und schadstoffarme, insbesondere auch rußarme Verbrennung.

In Figur 4 ist das Steuerdiagramm der oben beschriebenen Kraftstoffeinspritzpumpe dargestellt. Dabei ist über die Kurbelwellendrehwinkellagen der zugehörenden Brennkraftmaschine das Förderdiagramm der Kraftstoffeinspritzpumpe mit einer Förderkennlinie 60 dargestellt. Man erkennt Fördermengenmaxima im Winkelabstand von 90°, die sich so ergeben, da, wie aus Figur 3 erkennbar, immer zwei Pumpenkolben, die bezüglich des Förderhubs nacheinander folgen, ihre geförderte Kraftstoffmenge über zum Beispiel die Teilkanäle 37a und 37d der Teilringnut 42 zuführen, von wo aus der Kraftstoff über den weiter verlaufenden Überströmkanal, der Längsbohrung 44, den Verteileröffnungen 53 bzw. 59 zugeführt wird. Die anderen Pumpenkolben sind in dieser Phase noch im Saughub, bei dem sie über das Rückschlagventil 41 bzw. über die Fülleitung 40 Kraftstoff in den Pumpenarbeitsraum 35 ansaugen. Bei den im Förderhub befindlichen Pumpenkolben ist das genannte Rückschlagventil 41 geschlossen und die Verbindung zu den gerade ansaugenden Pumpenkolben über die Teilkanäle 37b und 37c durch die Mantelfläche des Verteilers unterbunden. Mit fortschreitender Drehung des Antriebsnockens 4 werden kontinuierlich jeweils die nächstliegenden Pumpenkolben in ihren Förderhub versetzt und entsprechend durch die Ausnehmung 42 mit der Längsbohrung 44 verbunden. Dennoch ergibt sich kein kontinuierlicher Förderstrom bedingt durch die beschränkte Anzahl von Pumpenkolben. Demzufolge ergeben sich diese in Figur 4 im oberen Diagrammzug gezeigten Fördermaxima und -minima.

In den unter der obengenannten Förderkennlinie 60 aufgezeigten Steuerzeiten sind mit 61 die Zeiten der Haupteinspritzung über die Verteileröffnung 53, bei der die Hauptmenge des Kraftstoffs kurz vor dem Zündzeitpunkt dem Brennraum zugeführt wird und die Steuerzeiten der Voreinspritzung 62 aufgeführt. Diese Steuerzeiten liegen vorzugsweise im der jeweiligen Maximalförderung gemäß Förderkennlinie 60 nahen Bereich, da hier mit einem optimalen Kraftstoffeinspritzdruck zu rechnen ist. Um zu verhindern, daß der Druck in den pumpenarbeitsräumen und den Teilkanälen bzw. dem Überströmkanal dann zu groß wird, wenn die Einspritzzeiten bzw. die Einspritzmengen minimal klein sind, kann parallel zum elektrisch gesteuerten Ventil 50 oder in dieses integriert ein Druckhalteventil vorgesehen werden, das den Höchstdruck begrenzt.

Obwohl die obenbeschriebene Kraftstoffeinspritzpumpe gemäß Figur 1 für eine Vor- und Haupteinspritzung vorgesehen ist, kann natürlich auch auf die Voreinspritzung verzichtet werden. Entsprechend anders wird dann das elektrisch gesteuerte Ventil angesteuert und es wird die zweite Verteileröffnung 59 weggelassen. Bei einer anderen Zahl von zu versorgenden Brennkraftmaschinenzylindern läuft bei einer für die Voreinspritzung ausgelegten Kraftstoffeinspritzpumpe die zweite Verteileröffnung 59 um das Eineinhalbfache des Winkelabstandes der einzelnen Druckleitungen 55 voneinander der ersten Verteileröffnung 53 voraus. Diese Bemessungsgrundlage liegt auch der in der Figur 2 gezeigten Ausführung zugrunde. Natürlich kann von dieser Winkelabgabe insofern abgegangen werden, als auch die Voreinspritzung auf später verlegt werden kann, so daß ein geringerer Teil des Saug- und Kompressionstaktes des Kolbens des entsprechenden Zylinders der Brennkraftmaschine für die Kraftstoffaufbereitung ausgenutzt wird. Wesentlich ist dabei, daß es zu keiner Überschneidung von Voreinspritzung in den einen Zylinder und Haupteinspritzung in den anderen Zylinder kommt.

## Patentansprüche

1. Kraftstoffeinspritzpumpe für Brennkraftmaschinen mit einem von einer Antriebswelle (2) angetriebenen Antriebsnocken (4, 7) durch den mit konstantem Förderhub wenigstens drei in je einer Zylinderbohrung (32) geführte Pumpenkolben (29) nacheinander zur Förderung von Kraftstoff unter Einspritzdruck angetrieben werden, die je einen Pumpenarbeitsraum (35) begrenzen und mit einem von der Antriebswelle (2) angetriebenen Verteiler (15), der einen Verbindungskanal (42) aufweist, durch den zwei Pumpenarbeitsräume (35) von im Förderhub befindlichen Pumpenkolben (29) über von den Pumpenarbeitsräumen (35) ausgehende Überströmkanäle (37 a - 37 d), die in eine Führungsbohrung (17) des Verteilers (15) münden miteinander verbindbar sind und der Verbindungskanal (42) über eine Längsbohrung (44) im Verteiler (15) ständig mit einer Verteileröffnung (53) am Verteiler verbunden ist, durch die nacheinander bei der Drehung des Verteilers (15) zu Einspritzstellen führende Druckleitungen (55) mit dem Verbindungskanal (42) verbunden werden und mit einem ständig mit dem Verbindungskanal (42) verbundenen Entlastungskanal (49), in dem ein gesteuertes Ventil (50) zur Steuerung der Kraftstoffmenge angeordnet ist, dadurch gekennzeichnet, daß der Verbindungskanal eine Teilringnut (42) ist, die im Laufe der Drehung des Verteilers (15) immer mit wenigstens zwei Pumpenarbeitsräumen (35) von im Förderhub befindlichen Pumpenkolben (29) über die zu diesen gehörenden Überströmkanäle (37 a - 37 d) verbunden sind und das gesteuerte Ventil ein elektrisch gesteuertes Ventil (50) ist, durch dessen Schließzustand die Förderung der jeweiligen wenigstens zwei im Förderhub befindlichen Pumpenkolben (29) unter Einspritzdruck zu den Einspritzstellen bestimmt wird.

2. Kraftstoffeinspritzpumpe nach Anspruch 1, dadurch gekennzeichnet daß der Nocken (4) eine Nockenbahn in Form einer exzentrisch zur Antriebswellenachse (5) liegende Kreisbahn (7) hat, auf der ein Wälzlager (8) aufgebracht ist.

3. Kraftstoffeinspritzpumpe nach den Ansprüchen 1 oder 2, dadurch gekennzeichnet, daß mit der Längsbohrung (44) die Entlastungsleitung (49) ständig verbunden ist.

4. Kraftstoffeinspritzpumpe nach Anspruch 3, dadurch gekennzeichnet, daß die Längsbohrung (44) mit einer Außenringnut (47) am Verteiler (15) verbunden ist, von der die Entlastungsleitung (49) abführt.

5. Kraftstoffeinspritzpumpe nach den Ansprüchen 3 oder 4, dadurch gekennzeichnet, daß am Verteiler eine zweite Verteileröffnung (59) vorgesehen ist, die der ersten Verteileröffnung um einen Winkel vorläuft, der größer als der Teilungswinkelabstand von aufeinanderfolgenden Druckleitungen (55) ist und kleiner als zwei solcher Teilungswinkelabstände, vorzugsweise das Eineinhalbfache des Teilungswinkelabstandes ist.

6. Kraftstoffeinspritzpumpe nach einem der vorstehenden Ansprüche, dadurch gekennzeichnet, daß die Pumpenarbeitsräume (35) über eine ein Ventil enthaltende, mit einer Kraftstoffversorgungsquelle verbundene Fülleitung (50) beim Saughub der Pumpenkolben verbindbar sind.

7. Kraftstoffeinspritzpumpe nach Anspruch 6, dadurch gekennzeichnet, daß das Ventil ein Rückschlagventil ist.

8. Kraftstoffeinspritzpumpe nach Anspruch 6, dadurch gekennzeichnet, daß das Ventil ein synchron zur Antriebswelle gesteuertes Schieberventil ist.

9. Kraftstoffeinspritzpumpe nach einem der vorstehenden Ansprüche, dadurch gekennzeichnet, daß der Verteiler (15) koaxial zur Antriebswelle (2) angeordnet mit dieser gekoppelt ist.

10. Kraftstoffeinspritzpumpe nach einem der vorstehenden Ansprüche 1 bis 8, dadurch gekennzeichnet, daß der Verteiler (115) von der Antriebswelle (102) über ein Getriebe (63, 64) angetrieben wird.

11. Kraftstoffeinspritzpumpe nach einem der Ansprüche 4 bis 10, dadurch gekennzeichnet, daß die Außenringnut (47) auf der der Verteileröffnung (53) gegenüberliegenden Seite eine zum Kräfteausgleich am Verteiler dienende vergrößerte Breite aufweist.

## Claims

1. Fuel-injection pump for internal-combustion engines, with a drive cam (4, 7) which is driven by a drive shaft (2) and by means of which there are driven in succession with a constant feed stroke, for feeding fuel under injection pressure, at least three pump pistons (29) which are each guided in a cylindrical bore (32) and which each limit a pump working space (35), and with a distributor (15) which is driven by the drive shaft (2) and which has a connecting channel (42), by means of which two pump working spaces (35) of pump pistons (29) which are in the feed stroke, can be connected to one another via overflow channels (37a - 37d) which extend from the pump working spaces (35) and which open into a guide bore (17) of the distributor (15), the connecting channel (42) being constantly connected via a longitudinal bore (44) in the distributor (15) to a distributor orifice (53) which is located on the distributor and by means of which, during the rotation of the distributor, delivery lines (55) leading to injection points are successively connected to the connecting channel (42), and with a relief channel (49) which is connected constantly to the connecting channel (42) and in which a controlled valve (50) for controlling the fuel quantity is arranged, characterised in that the connecting channel is a part-annular groove (42) which, during the rotation of the distributor (15), is always connected to at least two pump working spaces (35) of pump pistons (29) which are in the feed stroke, via the overflow channels (37a - 37d) belonging to these, and the controlled valve is an electrically controlled valve (50), by the closing state of which is determined the feeding of the at least two respective pump pistons (29), which are in the feed stroke, under injection pressure to the injection points.

2. Fuel-injection pump according to Claim 1, characterised in that the cam (4) has a cam track in the form of a circular track (7) which is eccentric to the drive-shaft axis (5) and on which a rolling bearing (8) is attached.

3. Fuel-injection pump according to Claims 1 or 2, characterised in that the relief line (49) is connected constantly to the longitudinal bore (44).

4. Fuel-injection pump according to Claim 3, characterised in that the longitudinal bore (44) is connected to an outer annular groove (47) which is located on the distributor (15) and from which the relief line (49) leads off.

5. Fuel-injection pump according to Claims 3 or 4, characterised in that there is provided on the distributor a second distributor orifice (59) which precedes the first distributor orifice by an angle which is larger than the divisional angular spacing of successive delivery lines (55) and smaller than two such divisional angular spacings, preferably one and a half times the divisional angular spacing.

6. Fuel-injection pump according to one of the preceding claims, characterised in that the pump working spaces (35) can be connected during the suction stroke of the pump pistons via a filling line (50) containing a valve and connected to a fuel-supply source.

7. Fuel-injection pump according to Claim 6, characterised in that the valve is a non-return valve.

8. Fuel-injection pump according to Claim 6, characterised in that the valve is a slide valve controlled synchronously with the drive shaft.

9. Fuel-injection pump according to one of the preceding claims, characterised in that the distributor (15), arranged coaxially to the drive shaft (2), is coupled to the latter.

10. Fuel-injection pump according to one of the preceding Claims 1 to 8, characterised in that the distributor (115) is driven by the drive shaft (102) via a gear (63, 64).

11. Fuel-injection pump according to one of Claims 4 to [lacuna], characterised in that the outer annular groove (47) has, on the side opposite the distributor orifice (53), an increased width serving for force compensation on the distributor.

## Revendications

1. Pompe d'injection de carburant pour moteurs à combustion interne, avec une came d'entraînement (4, 7) entraînée par un arbre d'entraînement (2) et par laquelle sont entraînés l'un après l'autre pour le refoulement de carburant sur la pression d'injection avec une course de refoulement constante au moins trois pistons de pompe (29) guidés chacun dans un alésage cylindrique (32), qui délimitent chacun une chambre de travail (35) de la pompe, et avec un répartiteur (15) entraîné par l'arbre d'entraînement (2) et qui comporte un canal de liaison (42), par lequel deux chambres de travail (35) de piston de pompe (29) se trouvant dans la course de refoulement sont susceptibles d'être reliées ensemble par l'intermédiaire de canaux de trop plein (37a - 37d) partant de ces chambres de travail (35) et qui débouchent dans un alésage de guidage (17) du répartiteur (15), tandis que le canal de liaison (42) est relié constamment par l'intermédiaire d'un perçage longitudinal (44) dans le répartiteur (15) à un orifice de répartition (53) sur le répartiteur, orifice par l'intermédiaire duquel les canalisations de refoulement (55) aboutissant aux points d'injection sont reliées successivement au canal de liaison (42) lors de la rotation du répartiteur (15), et avec un canal de décharge (49) relié en permanence au canal de liaison (42) et dans lequel est disposée une vanne commandée (50) pour le contrôle de la quantité de carburant,
pompe d'injection de carburant caractérisée en ce que le canal de liaison est une gorge annulaire partielle (42) qui, au cours de la rotation du répartiteur (15), est toujours reliée à au moins deux chambres de travail (35) de piston de pompe (29) se trouvant dans la course de refoulement par l'intermédiaire des canaux de trop plein (37a - 37d) appartenant à ces chambres, tandis que la vanne commandée est une vanne (50) commandée électriquement, par l'état de fermeture de laquelle est déterminé le refoulement sous la pression d'injection vers les points d'injection respectifs d'au moins deux pistons de pompe (29) se trouvant en course de refoulement.

2. Pompe d'injection de carburant selon la revendication 1, caractérisée en ce que la came (4) a une piste de came en forme de piste circulaire (7) excentrique par rapport à l'axe (5) de l'arbre d'entraînement, sur laquelle est rapporté un palier à roulement (8).

3. Pompe d'injection de carburant selon la revendication 1 ou la revendication 2, caractérisée en ce que la canalisation de décharge (49) est reliée en permanence au perçage longitudinal (44).

4. Pompe d'injection de carburant selon la revendication 3, caractérisée en ce que le perçage longitudinal (44) est relié au répartiteur (15) par une gorge annulaire externe (47), dont part la canalisation de décharge (49).

5. Pompe d'injection de carburant selon l'une des revendications 3 ou 4, caractérisée en ce qu il est prévu sur le répartiteur un second orifice répartiteur (59) qui précède le premier orifice répartiteur d'un angle qui est supérieur à l'intervalle angulaire de répartition des canalisations de refoulement (55) successives et qui est inférieur à deux de ces intervalles angulaires de répartition, en étant de préférence égal à une fois et demie cet intervalle.

6. Pompe d'injection de carburant selon l'une des précédentes revendications, caractérisée en ce que les chambres de travail (35) de la pompe sont susceptibles d'être reliées, lors de la course d'aspiration des pistons de pompe, par l'intermédiaire d'une canalisation de remplissage (50) comprenant une soupape et reliée à une source d'alimentation en carburant.

7. Pompe d'injection de carburant selon la revendication 6, caractérisée en ce que la soupape est une soupape de retenue.

8. Pompe d'injection de carburant selon la revendication 6, caractérisée en ce que la soupape est une vanne à tiroir commandée en synchronisme par rapport à l'arbre d'entraînement.

9. Pompe d'injection de carburant selon une des précédentes revendications, caractérisée en ce que le répartiteur (15), disposé coaxialement par rapport à l'arbre d'entraînement (2), est couplé à celui-ci.

10. Pompe d'injection de carburant selon une des précédentes revendications 1 à 8, caractérisée en ce que le répartiteur (115) est entraîné par l'arbre d'entraînement (102) par l'intermédiaire d'une transmission (63, 64).

11. Pompe d'injection de carburant selon une des revendications 4 a 10, caractérisée en ce que la gorge annulaire externe (47) sur le côté opposé à l'orifice répartiteur (53), a une largeur augmentée servant à équilibrer les efforts sur le répartiteur.
